# EUROPEAN PATENT SPECIFICATION

(11) **EP 4 449 569 B1**
(45) Date of publication and mention of the grant of the patent: **24.12.2025**
(21) Application number: 23772909.0
(22) Date of filing: 26.09.2023
(51) Int. Cl.: H02G 3/06, H01R 9/05, H02G 15/013, H02G 15/04

(54) **CLAMPING DEVICE FOR CABLE CONNECTOR ASSEMBLY**
KLEMMVORRICHTUNG FÜR KABELVERBINDERANORDNUNG
DISPOSITIF DE SERRAGE POUR ENSEMBLE CONNECTEUR DE CÂBLE

(30) Priority: 17.10.2022 EP 22201984
(43) Date of publication of application: 23.10.2024
(73) Proprietor: CMP Products Limited, St Peters Newcastle upon Tyne Tyne and Wear NE6 1BS (GB)
(72) Inventor: BIRRELL, Iain, Cramlington Northumberland NE23 1WH (GB); FRIZZELL, Lee, Cramlington Northumberland NE23 1WH (GB)
(74) Representative: Murgitroyd & Company
(86) International application number: PCT/EP2023/076590
(87) International publication number: WO 2024/083460

(56) References cited:
- EP-A1- 3 855 589
- WO-A1-01/93395
- WO-A1-2021/148254
- GB-A- 2 450 519
- US-A1- 2019 356 124

## Description

The present disclosure relates to a clamping device for a cable connector assembly for clamping an armour layer of a cable, and relates particularly, but not exclusively, to a clamping device for clamping single wire armour or basket weave braid or screen of a cable within a cable gland.

Cable glands provide a mechanical connection between a cable and an installation, such as a junction box. The connection may have to satisfy one or more physical requirements, such as the ability to resist pulling forces experienced by the cable, to prevent the ingress of water from the surrounding environment, or the force of an explosion.

A cable may include an integrated layer of armour for providing mechanical strength to the cable and for preventing damage to the inner layers and wires of the cable. The armour layer may for example be single wire armour, metallic tape, braid or screen. The armour, tape, braid or screen may also be present within the cable for electrical or electromagnetic (EMC) purposes.

Armour layers are typically metallic and it is therefore often necessary for electrical safety to provide a secure connection between the armour layer and earth when the cable is installed in the cable gland. Therefore, in addition to providing a secure mechanical connection between the installation and the cable, the cable gland must maintain a reliable electrical connection between the armour layer of the cable and earth. This is usually achieved by means of a clamping device arranged in the cable gland housing. The clamping device has an inner part known as a cone and an outer part known as a clamping ring, and the cable armour layer is clamped between the cone and the clamping ring and held in the clamping position by the cable gland housing.

Different armour types have different physical characteristics. For example, single wire armour comprises wires which are thick and stiff, while braid comprises a large number of finer wires. In order to provide a sufficiently secure mechanical and electrical connection, the clamping device of the cable gland must be chosen so that it closely matches the physical dimensions of the armour layer of the cable being clamped.

Clamping devices for cable glands are known in which a pair of cones of different sizes is provided, wherein the cone of one size is used for braid, and the cone of the other size is used for single wire armour. Alternatively, a double sided, 'reversible' or 'universal' cone can be provided, wherein one end of the cone is suitably sized for braid and the other end of the cone is suitably sized for single wire armour, and the double cone is reversibly arranged in a cable gland, the orientation of the double cone is chosen by the installer depending on the type of armour to be clamped. However, because two cones are usually provided when a cable gland assembly is supplied, there is a possibility of choosing the inappropriately sized cone for a particular cable armour type, which means that when installed, the mechanical or electrical connection has an increased risk of failure.

Clamping devices are also known in which a tapering gap is formed between the cone and the clamping ring. The cable armour layer is held in a clamped condition in the tapering gap, but the position of the cone and clamping ring relative to each other varies, depending on whether braid or single wire armour is being clamped and the thickness of the armour layer. This in turn means that the position of the two mutually engaging cable gland housing parts also varies with the type and thickness of cable armour being clamped, as a result of which it is difficult to determine whether a reliable clamping connection has been made.

A further clamping device for an armour layer of a cable for use in a cable gland is disclosed in WO 2021/148254. This clamping device works well when clamping single wire armour, although difficulties in maintaining a solid retention of the clamping ring, when the body of the cable gland is removed for inspection can be experienced when clamping braid, which is generally thinner than single wire armour.

Further known clamping devices are disclosed in GB 2450519 and WO 01/93395.

Preferred embodiments of the present disclosure seek to overcome one or more of the above disadvantages.

According to a first aspect of the present disclosure, there is provided a clamping device as defined in claim 1.

By providing at least one clamping portion which is displaceable towards the inner part of the cable extending through the aperture as a result of clamping of the armour layer of the cable between the insert and the clamping member such that the armour layer is clamped between at least one first clamping surface and a clamping member and/or between at least one second clamping surface and at least one recess receiving at least part of the at least one second clamping surface, this provides the advantage of increasing the axial force required to pull the armour layer out of the clamping device when the armour layer is insufficiently thick to be securely clamped between a first clamping surface and the clamping member. In addition, the arrangement in which the armour layer is clamped between at least one second clamping surface and at least one recess receiving at least part of the at least one second clamping surface provides the advantage that less reliance is necessary on the closeness of the mechanical fit between the clamping portion, the armour layer and the clamping member, and prevents inadvertent removal of the clamping member when the body of the cable gland is removed for inspection purposes.

At least one said second clamping surface may be formed at an end portion of the corresponding said clamping portion.

This provides the advantage of enabling easier manufacture of the clamping portion by, for example, bending the end portion of the clamping portion away from an axis of the cable connector.

At least one said second clamping surface may be adapted to be compressed when the armour layer is clamped between the corresponding clamping portion and the clamping member so that the armour layer is clamped between the first clamping surface and the clamping member and between the second clamping surface and the clamping member.

This provides the advantage of increasing the contact surface between the armour layer and the insert, thereby further improving reliability of the device.

At least part of at least one said clamping portion may be displaceable towards the inner part of the cable extending through the aperture by means of deformation of said part of the clamping portion.

This provides the advantage of reducing the complexity of the insert and reducing its manufacturing cost.

At least part of at least one said first clamping surface may be defined by a plurality of inwardly displaceable portions separated by slots.

This provides the advantage of enabling the mechanical characteristics of the clamping surface to be matched to the intended use of the device, and enables a wider variety of materials to be used for a clamping surface.

The slots may terminate at a location spaced from an axial end of the insert.

This provides the advantage of enabling the insert to be more easily manufactured, while increasing the mechanical strength of the insert.

The insert may comprise an insert body and a clamping part mounted to the insert body, wherein the clamping part defines at least one said clamping portion and an end portion of the insert body is deformed radially outwards to prevent removal of the clamping part from the insert body.

According to another aspect of the present disclosure, there is provided a method as defined in claim 10.

The clamping member may have an annular body adapted to surround the insert.

The clamping member may have an increasing internal diameter in a direction of a longitudinal axis of the clamping member from at least one said recess to at least one axial end of the clamping member.

This provides the advantage of reducing the risk of damage to the armour layer as the armour layer is clamped between the insert and the clamping member.

The clamping member may have a single said recess located substantially equidistantly from said axial ends of the clamping member, and a respective said increasing internal diameter in a direction from said recess to each said axial end of the clamping member.

This provides the advantage of maximising the possible length of the region of increasing internal diameter, thereby making the tapering of the region of increasing internal diameter as shallow as possible. This in turn further minimises the risk of damage to the armour layer.

The clamping member may be adapted to stretch when an armour layer of the cable is clamped between at least one said first clamping surface and the clamping member and/or between at least one said second clamping surface and at least one said recess receiving at least part of said at least one said second clamping surface.

This provides the advantage of enabling a wide range of armour layer thicknesses to be clamped effectively.

A plurality of said recesses may be arranged at substantially equal respective axial distances from each axial end of the clamping member.

This provides the advantage of making it more difficult to assemble the clamping apparatus incorrectly, thereby improving reliability of the apparatus.

The insert and the clamping member may be adapted to abut each other in an axial direction of the cable when said armour layer is clamped between the insert and the clamping member when the insert and the clamping member are in a predetermined position relative to each other.

This provides the advantage of enabling the length of the clamping apparatus, in an axial direction of the cable, to be constant for a range of cable armour thicknesses, thereby enabling reliable connection of a cable connector to the cable armour easier to determine.

According to a further aspect of the present disclosure, there is provided a cable connector as defined in claim 11.

The first and second housing parts may be co-operatively threaded such that engagement of the first housing part by the second housing part causes one housing part to abut the insert and the other housing part to abut the clamping member to move the clamping member to surround the insert and to thereby engage the armour layer between the clamping member and at least one said clamping surface of the insert.

A position of the first housing part relative to the second housing part may be defined by abutment with said insert and said clamping member in an axial direction of the cable when said armour layer is clamped between the insert and the clamping member when the insert and clamping member are in a predetermined position relative to each other.

The position of the first housing part relative to the second housing part may be defined by abutment of the first housing part with one of said insert and said clamping member, and abutment of the second housing part with the other of said insert and said clamping member.

The cable connector may be a cable gland.

A preferred embodiment of the disclosure will now be described, by way of example only and not in any limitative sense, with reference to the accompanying drawings in which:-
Figure 1A is a perspective view of an insert of a clamping device of an embodiment, before deformation of an end portion of an insert body thereof;
Figure 1B is a perspective view of the insert of Figure 1A, after deformation of the end portion of the insert body;
Figure 1C is a cross sectional view of the insert of Figure 1A;
Figure 1D is a cross sectional view of the insert of Figure 1B;
Figure 2 is a cross sectional view of a cable gland of a first embodiment incorporating the clamping device with a braid armour layer of a cable located therein, prior to clamping;
Figure 3 is an enlarged view of part of Figure 2;
Figure 4 is a view corresponding to Figure 2 with the armour layer clamped between the insert and the clamping member;
Figure 5 is an enlarged view of part of Figure 4;
Figure 6 is a cross sectional view of the cable gland of Figure 2 with a wire armour layer of a cable located therein, prior to clamping;
Figure 7 is an enlarged view of part of Figure 6;
Figure 8 is a view corresponding to Figure 6 with the armour layer clamped between the insert and the clamping member;
Figure 9 is an enlarged view of part of Figure 8;
Figure 10 is a cross sectional view, corresponding to Figure 6, of a cable gland of a second embodiment incorporating the clamping device with a wire armour layer of a cable located therein, prior to clamping;
Figure 11 is an enlarged view, corresponding to Figure 7, of part of Figure 10;
Figure 12 is a view corresponding to Figure 8 with the armour layer clamped between the insert and the clamping member;
Figure 13 is an enlarged view, corresponding to Figure 9, of part of Figure 12;
Figure 14 is a cross sectional view, corresponding to Figure 2, of the cable gland of Figure 10 with a braid armour layer of a cable located therein, prior to clamping;
Figure 15 is an enlarged view, corresponding to Figure 3, of part of Figure 14;
Figure 16 is a view corresponding to Figure 4 with the armour layer clamped between the insert and the clamping member; and
Figure 17 is an enlarged view, corresponding to Figure 5, of part of Figure 16.

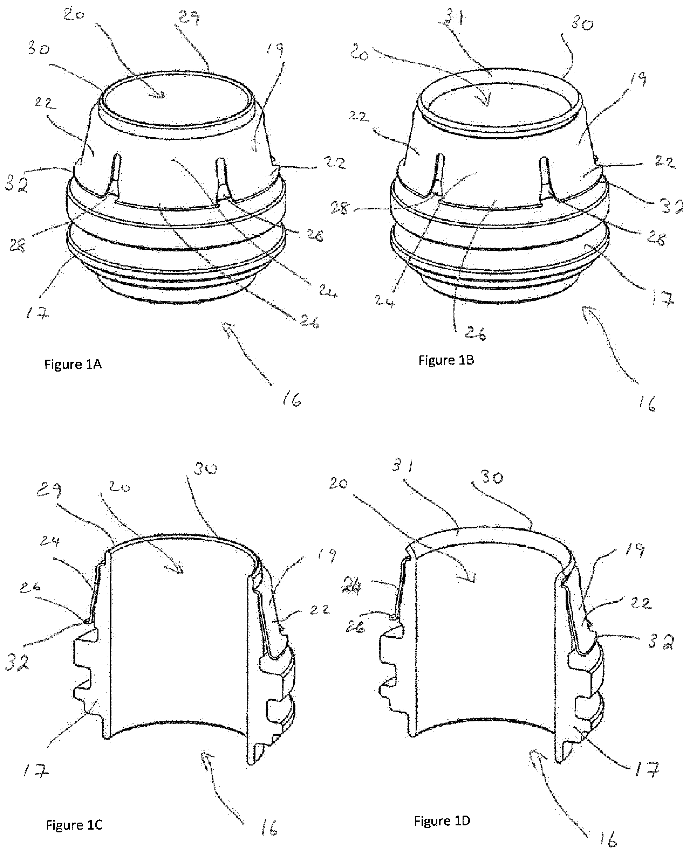

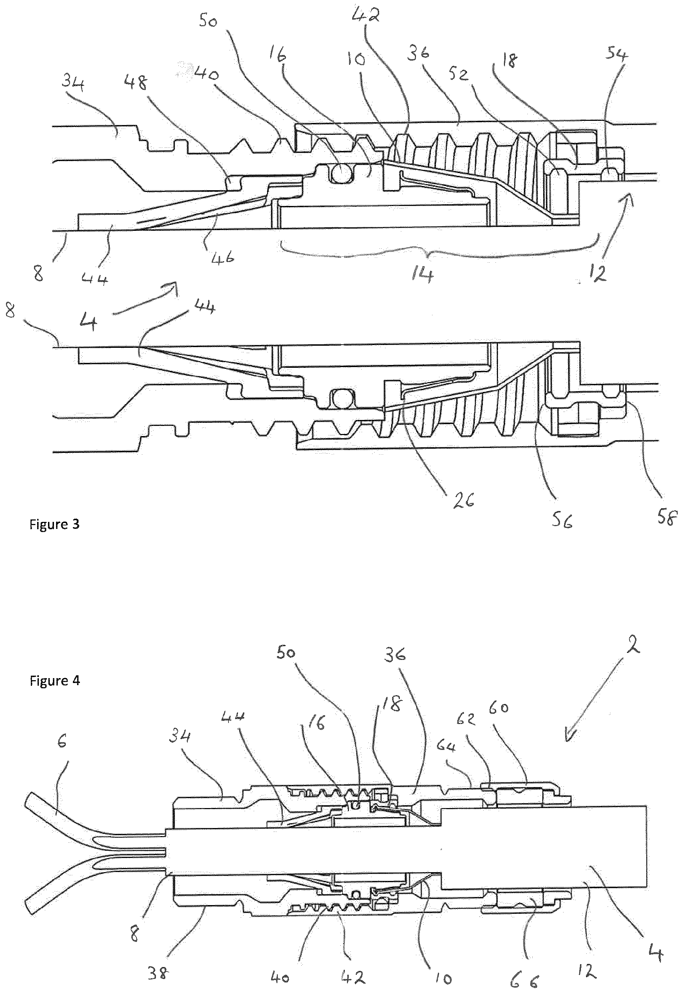

Referring to the Figures, Figures 1 to 5 show a cable connector in the form of a cable gland 2 for connecting a cable 4 to an enclosure (not shown). The cable 4 includes inner conductors 6, an inner sheath 8, an armour layer 10 of metallic braid, and an outer sheath 12. The cable gland 2 includes a clamping device 14 for clamping the armour layer 10 of the cable 4 to prevent removal of the cable 4 from the cable gland 2. The clamping device 14 includes an insert in the form of a compensating cone assembly 16, and a clamping member in the form of a clamping ring 18 adapted to be arranged radially outwardly of the compensating cone assembly 16 in order to clamp the armour layer 10 of the cable 4 between the compensating cone assembly 16 and clamping ring 18.

As shown in greater detail in Figures 1A to 1D, the compensating cone assembly 16 has an aperture 20 therethrough for receiving an inner part of the cable 4 comprising the inner conductors 6 and the inner sheath 8, and is formed from an insert body 17 and a clamping part 19 mounted to the insert body 17, wherein the clamping part 19 defines a series of circumferentially arranged clamping portions 22, wherein each clamping portion 22 defines a first clamping surface 24 and a second clamping surface in the form of radially outwardly flared ends 26 of the clamping portions 22. The clamping portions 22 are separated by slots 28 extending from a position spaced from a first end 30 of the clamping part 19 to a second end 32 of the clamping part 19. The clamping portions 22 can be resiliently displaced radially inwardly, in a manner described in greater detail below.

In order to form the compensating cone assembly 16, the clamping part 19 is placed over the insert body 17 as shown in Figures 1A and 1C, and a rigid tool (not shown) is then pushed into the end of the insert body 17 to deform an edge 29 of the insert body 17 radially outwards to form a flared edge 31, as shown in Figures 1B and 1D. The flared edge 31 then prevents the clamping part 19 from being removed from the insert body 17.

The cable gland 2 has a first housing part in the form of an entry item 34 and a second housing part 36. The entry item 34 has a first threaded portion 38 on its outer surface for engagement with a threaded portion on an aperture of an enclosure (not shown) to which the cable gland 2 is to be mounted or on a nut (not shown) for securing the cable gland 2 to the enclosure. The entry item also has a second threaded portion 40 on its outer surface for engaging a threaded portion 42 on an inner surface of the second housing part 36 to enable the second housing part 36 to be mounted to the entry item 34.

A frusto-conical flexible seal 44 for sealingly engaging the outer surface of the inner sheath 8 of the cable 4 is supported by a seal support 46 and engages an annular recess 48 in an inner surface of the entry item 34. The seal support 46 is held in position in the annular recess 48 by the compensating cone assembly 16, which is in turn removably held in position in the entry item 34 by means of an annular resilient clip or O-ring 50.

The clamping ring 18 includes recesses in the form of annular grooves 52, 54 located equidistantly from axial ends 56, 58 of the clamping ring 18 so that the clamping ring 18 can be arranged in the cable gland 2 in both orientations. The cable gland 2 includes a third housing part 60 having a threaded portion 62 on its inner surface which engages a threaded portion 64 on an outer surface of the second housing part 36 to enable the third housing part 60 to be mounted to the second housing part 36. Mounting of the third housing part 60 to the second housing part 36 axially compresses a seal 66 which causes the seal 66 to expand radially inwardly to sealingly engage an outer surface of the outer sheath 12 of the cable 4.

The operation of the cable gland 2 shown in Figures 1 to 5 will now be described.

In order to secure the cable gland 2 to the cable 4, the second 36 and third 60 housing parts, the clamping ring 18 and the seal 66 are loosely mounted to the outer sheath 12 of the cable 4, and the braid armour layer 10 of the cable 4 is splayed radially outwardly. The inner part of the cable including the inner conductors 6 and the inner sheath 8 is inserted into the entry item 34 through the aperture in the compensating cone assembly 16 and through the flexible seal 44 and seal support 46 so that the armour layer 10 of the cable 4 lies over the first clamping surfaces 24 and radially outwardly flared ends 26 of the clamping portions 22 of the compensating cone assembly 16.

The second housing part 36 is then tightened onto the entry item 34, as a result of which the clamping ring 18 is brought into axial abutment with the compensating cone assembly 16 and second housing part 36. This causes the outwardly flared ends 26 of the clamping portions 22 of the compensating cone assembly 16 to urge the braid armour layer 10 into the 52 of the clamping ring 18, thereby firmly clamping the armour layer 10 in position between the clamping portions of the compensating cone assembly 16 and the clamping ring. At the same time, the outwardly flared end portions of the compensating cone assembly 16 are received in one of the grooves of the clamping ring, which forces the braid armour layer into the inner groove to anchor the armour layer in position. This also secures the braid armour layer in position between the compensating cone assembly 16 and the clamping ring 18 and preventing the armour layer 10 from being pulled out of the cable gland 2. The armour layer 10 also remains in position over the outwardly flared ends 26 of the clamping portions 22 of the compensating cone assembly 16 when the second housing part 36 is removed for visual inspection, so that an inspector can check that the clamping ring 18 is fully tightened into abutment with the compensating cone assembly 16 and is securely in place.

The third housing part 60 is then tightened onto the second housing part 36 to axially compress the seal 66 into engagement with the outer sheath 12 of the cable 4.

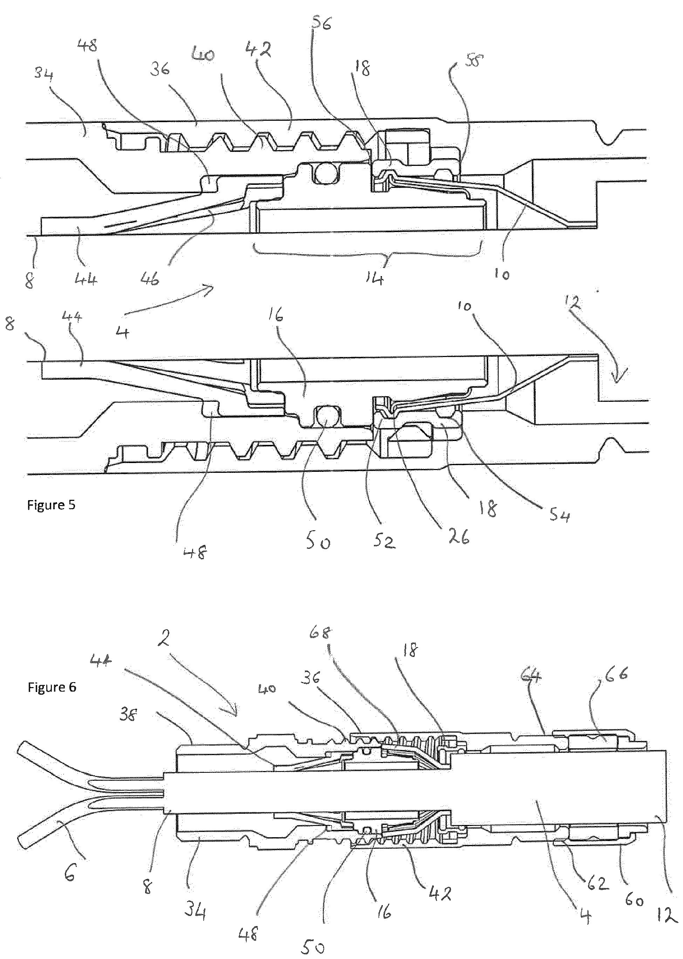

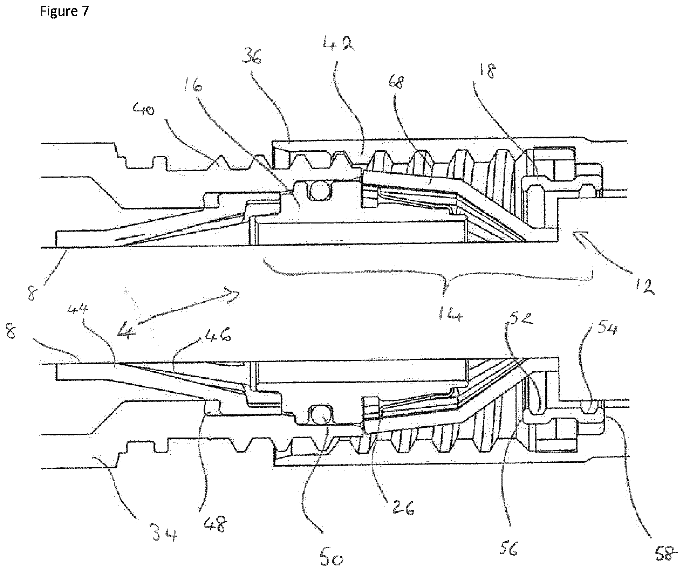

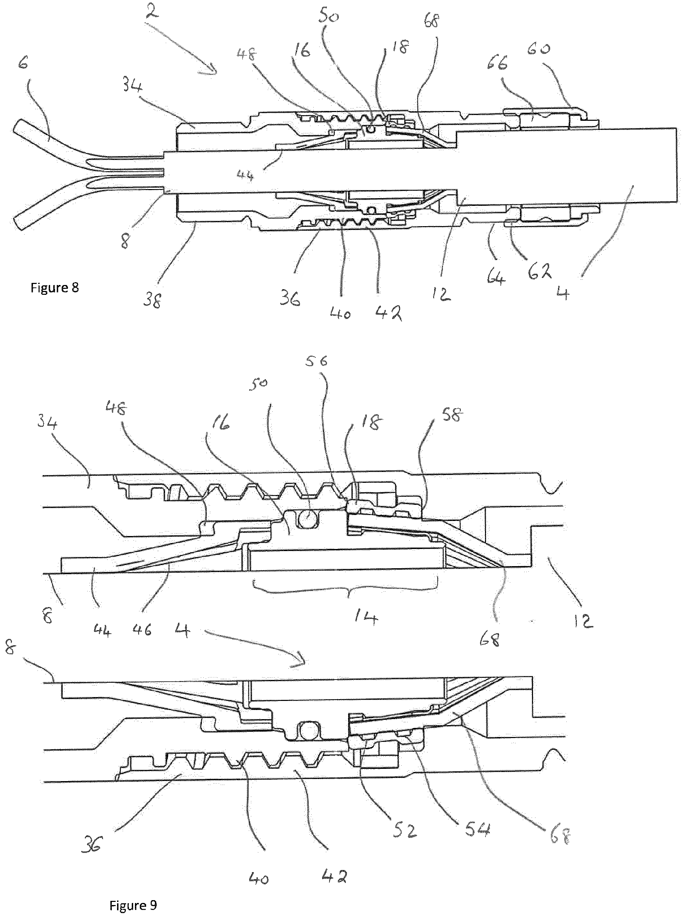

Figures 6 to 9 illustrate the operation of the cable gland 2 when clamping an armour layer of the cable 4 consisting of a single wire layer 68.

Referring to Figures 6 to 9, the cable gland 2 is mounted to the cable 4 in a manner identical to that described with reference to Figures 1 to 5. However, when the armour layer comprises a single wire layer 68, because the single wire layer 68 is thicker than the braid armour layer 10 and has greater rigidity than the clamping portions 22 of the compensating cone assembly 16, the thicker wire layer 68 causes the outwardly flared ends 26 of the clamping portions 22 of the compensating cone assembly 16 to become flattened between the insert body 17 and the single wire layer 68 so that the single wire layer 68 is clamped between the first clamping surfaces 24 of the clamping portions 22 and the clamping ring 18. At the same time, the clamping portions 22 are deflected radially inwards and the clamping ring 18 stretches slightly to accommodate the frusto-conical shape of the compensating cone assembly 16 and armour wire layer 68.

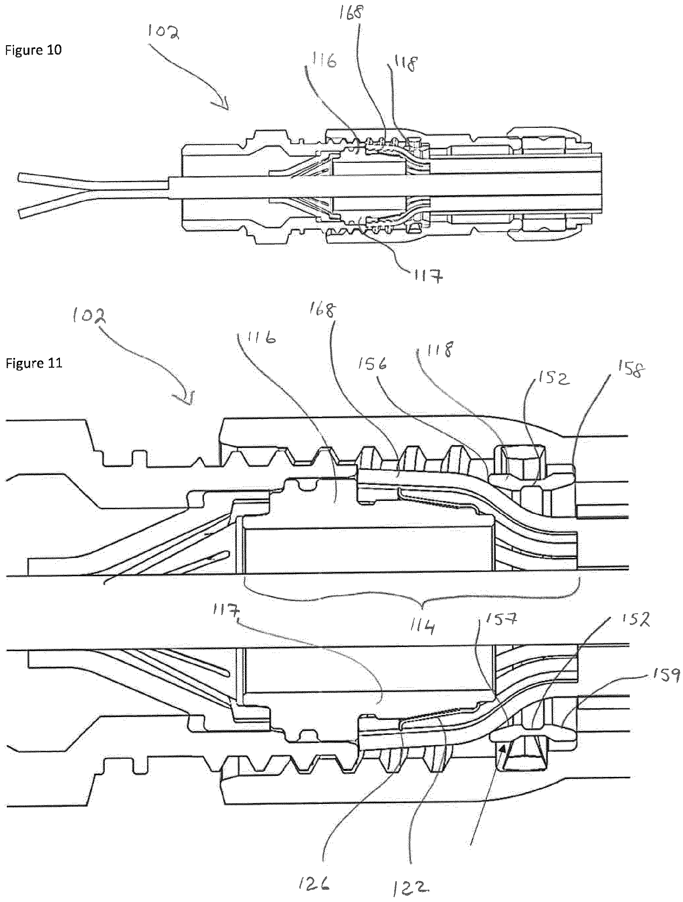

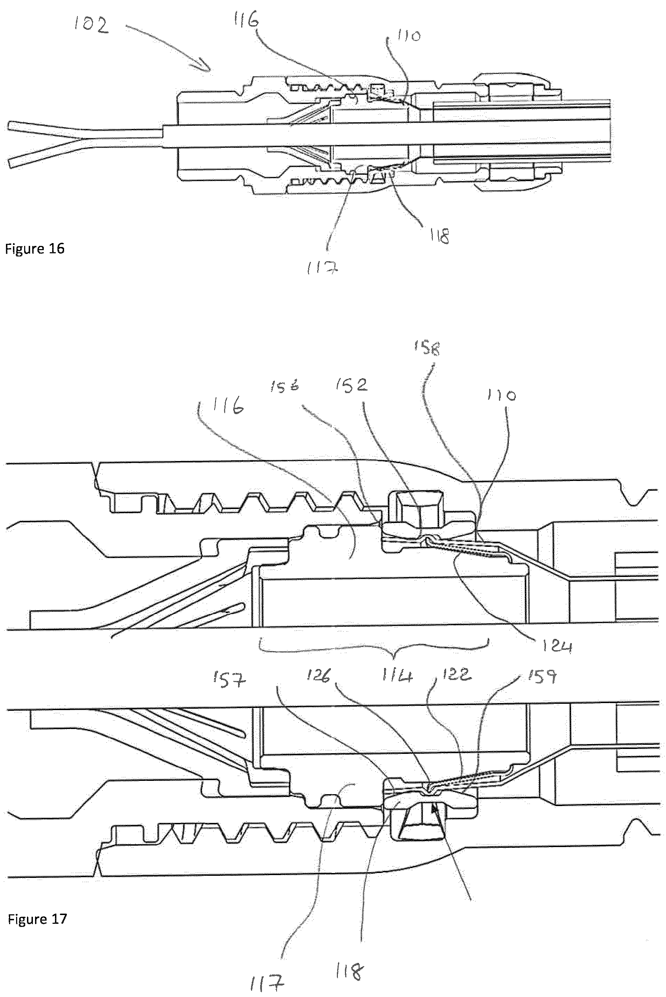

Referring to Figures 10 to 17, in which parts common to the embodiment of Figures 1 to 9 are denoted by like reference numerals but increased by 100, cable gland 102 includes a modified clamping device 114 for clamping the armour layer 110 of the cable 104. Compensating cone assembly 116 is identical to that of the embodiment of Figures 1 to 9, but modified clamping ring 118 has a single annular groove 152, located equidistantly from axial ends 156, 158 of the clamping ring 118. The annular groove 152 is separated from the ends 156, 158 of the clamping ring 118 by respective regions of increasing internal diameter in a direction of a longitudinal axis of the clamping ring 118 from the groove 152 to the ends 156, 158 in the form internally tapered regions 157, 159. The internally tapered region 157, 159 which engages the armour layer 168 of the cable 104 does so over a greater surface area than the arrangement of Figures 1 to 9, thereby reducing the risk of damage in the event that the cable armour layer 168 is made from a soft material such as aluminium.

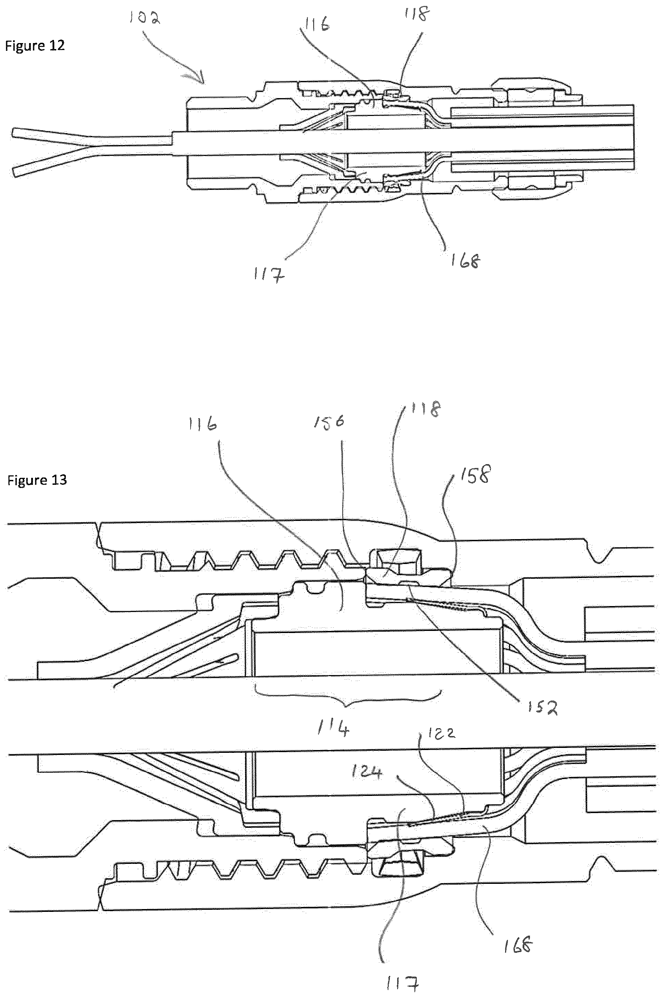

As shown in Figures 12 and 13, when the clamping ring 118 is forced over the armour layer 168 in the form of thick wires as a result of tightening the second housing part 136 onto the entry item 134, outwardly flared ends 126 of clamping portions 122 of the compensating cone assembly 116 become flattened between insert body 117 and the single wire layer 168 so that the single wire layer 168 is clamped between first clamping surfaces 124 of the clamping portions 122 and the clamping ring 118. At the same time, the clamping portions 122 are deflected radially inwards and the clamping ring 118 stretches slightly to accommodate the frusto-conical shape of the compensating cone assembly 116 and armour wire layer 168. The clamping ring 118 stretches to follow the angled shape of the armour wire layer 168, and the connection is secure. The internal taper 157, 159 inside the clamping ring 118 in contact with the armour layer 168 eases progression of the clamping ring 118 along the armour layer 168 as the clamping ring 118 is mounted to the armour layer 168. As a result of the second housing part 136 being fully tightened onto the entry item 134 forcing the clamping ring 118 over the thick armour wires 168, the armour wires 168 are then pushed inwards and they flatten out the compensating cone assembly 116; at this point, the thick armour wires 168 begin to deform the inner bore surface of the clamping ring 118, until the material of the clamping ring 118 yields, which stretches the shape and makes it conform to the angle of the now flattened compensating cone assembly 116 and the armour wires 168. The second housing part 136 then comes into abutment with the entry item 134 so that no further tightening is possible or required, and the installation process is complete. Figures 10 to 13 therefore correspond to Figures 6 to 9 respectively.

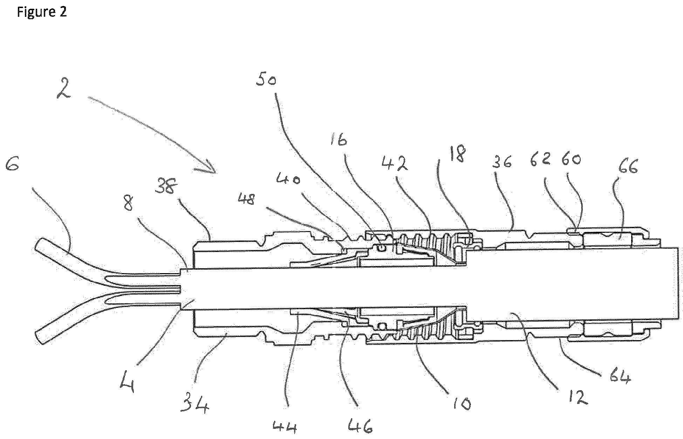

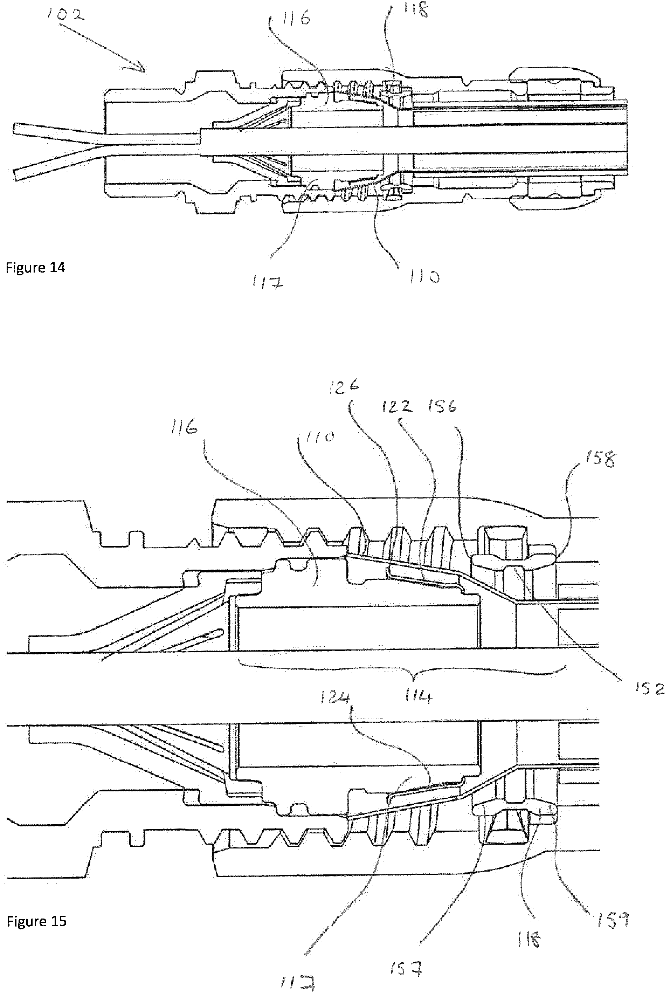

As shown in Figures 14 to 17, the principle of operation of the clamping device 114 in the case of thin braid armour layer 110 is substantially the same as that of the embodiment of Figures 1 to 9. Figures 14 to 17 therefore correspond to Figures 2 to 5 respectively.

It will be appreciated by persons skilled in the art that the above embodiment has been described by way of example only and not in any limitative sense, and that various alternations and modifications are possible without departure from the scope of the disclosure as defined by the appended claims.

## Claims

1. A clamping device (14) for clamping an armour layer (10) of a cable (4) in a cable connector (2), the clamping device comprising:
an insert (16) adapted to be received in the cable connector and defining an aperture (20) for receiving an inner part of the cable extending through the cable connector and a plurality of circumferentially arranged clamping portions (22) for engaging the armour layer of the cable; and
a clamping member (18) adapted to be received in the cable connector and to cooperate with the insert to clamp the armour layer of the cable between the insert and the clamping member;
wherein said clamping portions each define a respective first clamping surface (24) and a respective second clamping surface (26), wherein the second clamping surface is adapted to be located further from the inner part of the cable than the corresponding said first clamping surface in a direction transverse to a longitudinal axis of the cable;
and wherein at least part of each of said clamping portions is displaceable towards the inner part of the cable extending through said aperture as a result of clamping of the armour layer of the cable between the insert and the clamping member;
**characterised in that** the clamping member comprises at least one recess (52, 54) for receiving at least part of at least one said second clamping surface and each of said clamping portions has respective radially outwardly flared ends (26) defining respective said second clamping surfaces, wherein said second clamping surface is adapted to become flattened between the insert and the armour layer, for armour layer of a first thickness, such that the armour layer is clamped between said first clamping surface and the clamping member and said second clamping surface is adapted to engage at least one said recess, for armour layer of a second thickness, less than said first thickness, such that the armour layer is clamped between said second clamping surface and said recess to increase the force required to pull the armour layer out of the clamping device.

2. A clamping device according to claim 1, wherein at least one said second clamping surface is adapted to be compressed when the armour layer is clamped between the corresponding clamping portion and the clamping member so that the armour layer is clamped between the first clamping surface and the clamping member and between the second clamping surface and the clamping member.

3. A clamping device according to any one of the preceding claims, wherein at least part of clamping portions is displaceable towards the inner part of the cable extending through the aperture by means of deformation of said part of the clamping portion.

4. A clamping device according to any one of the preceding claims, wherein said first clamping surfaces are defined by a plurality of inwardly displaceable portions separated by slots (28).

5. A clamping device according to claim 4, wherein the slots terminate at a location spaced from an end (30) of the insert in a direction along the longitudinal axis of the cable.

6. A clamping device according to any one of the preceding claims, wherein the insert comprises an insert body (17) and a clamping part (19) mounted to the insert body, and wherein the clamping part defines at least one said clamping portion and an end portion (29) of the insert body is deformed radially outwards to prevent removal of the clamping part from the insert body.

7. A clamping device according to any one of the preceding claims, wherein the clamping member has an annular body adapted to surround the insert.

8. A clamping device according to claim 7, wherein the clamping member has an increasing internal diameter in a direction of a longitudinal axis of the clamping member from at least one said recess to at least one axial end of the clamping member, and optionally wherein the clamping member has a single said recess located substantially equidistantly from said axial ends of the clamping member, and a respective said increasing internal diameter in a direction from said recess to each said axial end of the clamping member.

9. A clamping device according to any one of the preceding claims, including one or more of the following features:
(i) wherein the clamping member is adapted to stretch when an armour layer of the cable is clamped between at least one said first clamping surface and the clamping member and/or between at least one said second clamping surface and at least one said recess receiving at least part of said at least one said second clamping surface;
(ii) wherein a plurality of said recesses are arranged at substantially equal respective axial distances from each axial end of the clamping member; or
(iii) wherein the insert and the clamping member are adapted to abut each other in an axial direction of the cable when said armour layer is clamped between the insert and the clamping member when the insert and the clamping member are in a predetermined position relative to each other.

10. A method of forming an insert of the clamping device according to claim 6, the method comprising mounting the clamping part to the insert body, and deforming an end portion of the insert body radially outwards to prevent removal of the clamping part from the insert body.

11. A cable connector (2) comprising a clamping device according to any one of claims 1 to 9, a first housing part (34) adapted to receive said insert, and a second housing part (36) adapted to engage said first housing part to maintain said insert and said clamping member in position relative to each other to clamp an armour layer of a cable between said at least one said clamping portion and said clamping member.

12. A cable connector according to claim 11, including one or more of the following features:
(i) wherein the first and second housing parts are co-operatively threaded such that engagement of the first housing part by the second housing part causes one housing part to abut the insert and the other housing part to abut the clamping member to move the clamping member to surround the insert and to thereby engage the armour layer between the clamping member and at least one said clamping surface of the insert; or
(ii) wherein a position of the first housing part relative to the second housing part is defined by abutment with said insert and said clamping member in an axial direction of the cable when said armour layer is clamped between the insert and the clamping member when the insert and clamping member are in a predetermined position relative to each other, and optionally wherein the position of the first housing part relative to the second housing part is defined by abutment of the first housing part with one of said insert and said clamping member, and abutment of the second housing part with the other of said insert and said clamping member.

13. A cable connector according to claim 11 or 12, wherein the cable connector is a cable gland.

## Patentansprüche

1. Eine Klemmvorrichtung (14) zum Klemmen einer Bewehrungsschicht (10) eines Kabels (4) in einem Kabelverbinder (2), wobei die Klemmvorrichtung Folgendes beinhaltet:
einen Einsatz (16), der angepasst ist, um in dem Kabelverbinder aufgenommen zu werden, und eine Öffnung (20) zum Aufnehmen eines Innenteils des Kabels, das sich durch den Kabelverbinder erstreckt, und eine Vielzahl von umlaufend angeordneten Klemmabschnitten (22) zum Eingreifen in die Bewehrungsschicht des Kabels definiert; und
ein Klemmelement (18), das angepasst ist, um in dem Kabelverbinder aufgenommen zu werden und mit dem Einsatz zusammenzuwirken, um die Bewehrungsschicht des Kabels zwischen dem Einsatz und dem Klemmelement zu klemmen;
wobei die Klemmabschnitte jeweils eine jeweilige erste Klemmoberfläche (24) und eine jeweilige zweite Klemmoberfläche (26) definieren, wobei die zweite Klemmoberfläche angepasst ist, um in einer zu einer Längsachse des Kabels querlaufenden Richtung weiter von dem Innenteil des Kabels entfernt angeordnet zu sein als die entsprechende genannte erste Klemmoberfläche;
und wobei mindestens ein Teil jedes der Klemmabschnitte infolge des Klemmens der Bewehrungsschicht des Kabels zwischen dem Einsatz und dem Klemmelement in Richtung des Innenteils des Kabels, der sich durch die Öffnung erstreckt, verlagerbar ist;
**dadurch gekennzeichnet, dass** das Klemmelement mindestens eine Aussparung (52, 54) zum Aufnehmen mindestens eines Teils von mindestens einer genannten zweiten Klemmoberfläche beinhaltet und jeder der Klemmabschnitte jeweilige radial nach außen aufgeweitete Enden (26) aufweist, die jeweilige genannte zweite Klemmoberflächen definieren, wobei die zweite Klemmoberfläche angepasst ist, um für eine Bewehrungsschicht einer ersten Dicke zwischen dem Einsatz und der Bewehrungsschicht flachgedrückt zu werden, sodass die Bewehrungsschicht zwischen der ersten Klemmoberfläche und dem Klemmelement geklemmt wird, und die zweite Klemmoberfläche angepasst ist, um für eine Bewehrungsschicht einer zweiten Dicke, die geringer als die erste Dicke ist, in mindestens eine genannte Aussparung einzugreifen, sodass die Bewehrungsschicht zwischen der zweiten Klemmoberfläche und der Aussparung geklemmt wird, um die Kraft zu erhöhen, die zum Ziehen der Bewehrungsschicht aus der Klemmvorrichtung erforderlich ist.

2. Klemmvorrichtung gemäß Anspruch 1, wobei mindestens eine genannte zweite Klemmoberfläche angepasst ist, um zusammengedrückt zu werden, wenn die Bewehrungsschicht zwischen dem entsprechenden Klemmabschnitt und dem Klemmelement geklemmt wird, sodass die Bewehrungsschicht zwischen der ersten Klemmoberfläche und dem Klemmelement und zwischen der zweiten Klemmoberfläche und dem Klemmelement geklemmt wird.

3. Klemmvorrichtung gemäß einem der vorhergehenden Ansprüche, wobei mindestens ein Teil der Klemmabschnitte mittels Verformung des Teils des Klemmabschnitts in Richtung des Innenteils des Kabels, der sich durch die Öffnung erstreckt, verlagerbar ist.

4. Klemmvorrichtung gemäß einem der vorhergehenden Ansprüche, wobei die ersten Klemmoberflächen durch eine Vielzahl von nach innen verlagerbaren Abschnitten definiert sind, die durch Schlitze (28) getrennt sind.

5. Klemmvorrichtung gemäß Anspruch 4, wobei die Schlitze an einer Stelle enden, die von einem Ende (30) des Einsatzes in einer Richtung entlang der Längsachse des Kabels beabstandet ist.

6. Klemmvorrichtung gemäß einem der vorhergehenden Ansprüche, wobei der Einsatz einen Einsatzkörper (17) und ein Klemmteil (19), das an dem Einsatzkörper montiert ist, beinhaltet und wobei das Klemmteil mindestens einen genannten Klemmabschnitt definiert und ein Endabschnitt (29) des Einsatzkörpers radial nach außen verformt ist, um ein Entfernen des Klemmteils von dem Einsatzkörper zu verhindern.

7. Klemmvorrichtung gemäß einem der vorhergehenden Ansprüche, wobei das Klemmelement einen ringförmigen Körper aufweist, der angepasst ist, um den Einsatz zu umgeben.

8. Klemmvorrichtung gemäß Anspruch 7, wobei das Klemmelement einen zunehmenden Innendurchmesser in einer Richtung einer Längsachse des Klemmelements von mindestens einer genannten Aussparung zu mindestens einem axialen Ende des Klemmelements aufweist und wobei das Klemmelement optional eine einzelne genannte Aussparung, die im Wesentlichen äquidistant von den axialen Enden des Klemmelements angeordnet ist, und einen jeweiligen genannten zunehmenden Innendurchmesser in einer Richtung von der Aussparung zu jedem genannten axialen Ende des Klemmelements aufweist.

9. Klemmvorrichtung gemäß einem der vorhergehenden Ansprüche, die eines oder mehrere der folgenden Merkmale umfasst:
(i) wobei das Klemmelement angepasst ist, sich zu dehnen, wenn eine Bewehrungsschicht des Kabels zwischen mindestens einer genannten ersten Klemmoberfläche und dem Klemmelement und/oder zwischen mindestens einer genannten zweiten Klemmoberfläche und mindestens einer genannten Aussparung, die mindestens einen Teil der mindestens einen genannten zweiten Klemmfläche aufnimmt, geklemmt wird;
(ii) wobei eine Vielzahl der Aussparungen in im Wesentlichen gleichen jeweiligen axialen Abständen von jedem axialen Ende des Klemmelements angeordnet ist; oder
(iii) wobei der Einsatz und das Klemmelement angepasst sind, in einer axialen Richtung des Kabels aneinander anzuliegen, wenn die Bewehrungsschicht zwischen dem Einsatz und dem Klemmelement geklemmt wird, wenn sich der Einsatz und das Klemmelement in einer vorgegebenen Position relativ zueinander befinden.

10. Ein Verfahren zum Bilden eines Einsatzes der Klemmvorrichtung gemäß Anspruch 6, wobei das Verfahren Folgendes beinhaltet: Montieren des Klemmteils an dem Einsatzkörper und Verformen eines Endabschnitts des Einsatzkörpers radial nach außen, um ein Entfernen des Klemmteils von dem Einsatzkörper zu verhindern.

11. Ein Kabelverbinder (2), der Folgendes beinhaltet: eine Klemmvorrichtung gemäß einem der Ansprüche 1 bis 9, ein erstes Gehäuseteil (34), das angepasst ist, um den Einsatz aufzunehmen, und ein zweites Gehäuseteil (36), das angepasst ist, um in das erste Gehäuseteil einzugreifen, um den Einsatz und das Klemmelement in Position relativ zueinander zu halten, um eine Bewehrungsschicht eines Kabels zwischen dem mindestens einen genannten Klemmabschnitt und dem Klemmelement zu klemmen.

12. Kabelverbinder gemäß Anspruch 11, der eines oder mehrere der folgenden Merkmale umfasst:
(i) wobei das erste und das zweite Gehäuseteil mit zusammenwirkenden Gewinden versehen sind, sodass der Eingriff des ersten Gehäuseteils durch das zweite Gehäuseteil bewirkt, dass ein Gehäuseteil an dem Einsatz anliegt und das andere Gehäuseteil an dem Klemmelement anliegt, um das Klemmelement zu bewegen, so dass es den Einsatz umgibt und dadurch in die Bewehrungsschicht zwischen dem Klemmelement und mindestens einer genannten Klemmoberfläche des Einsatzes eingreift; oder
(ii) wobei eine Position des ersten Gehäuseteils relativ zu dem zweiten Gehäuseteil durch Anliegen an dem Einsatz und dem Klemmelement in einer axialen Richtung des Kabels definiert wird, wenn die Bewehrungsschicht zwischen dem Einsatz und dem Klemmelement geklemmt wird, wenn sich der Einsatz und das Klemmelement in einer vorgegebenen Position relativ zueinander befinden, und wobei die Position des ersten Gehäuseteils relativ zu dem zweiten Gehäuseteil optional durch Anliegen des ersten Gehäuseteils an einem von dem Einsatz und dem Klemmelement und Anliegen des zweiten Gehäuseteils an dem anderen von dem Einsatz und dem Klemmelement definiert wird.

13. Kabelverbinder gemäß Anspruch 11 oder 12, wobei der Kabelverbinder eine Kabelverschraubung ist.

## Revendications

1. Un dispositif de serrage (14) servant à serrer une couche de blindage (10) d'un câble (4) dans un connecteur de câble (2), le dispositif de serrage comprenant :
un insert (16) conçu pour être reçu dans le connecteur de câble et définissant une ouverture (20) servant à recevoir une partie intérieure du câble s'étendant à travers le connecteur de câble et une pluralité de portions de serrage agencées circonférentiellement (22) servant à se mettre en prise avec la couche de blindage du câble ; et
un élément de serrage (18) conçu pour être reçu dans le connecteur de câble et pour coopérer avec l'insert afin de serrer la couche de blindage du câble entre l'insert et l'élément de serrage ;
où lesdites portions de serrage définissent chacune une première surface de serrage respective (24) et une deuxième surface de serrage respective (26), où la deuxième surface de serrage est conçue pour être située plus loin de la partie intérieure du câble que ladite première surface de serrage correspondante dans une direction transversale à un axe longitudinal du câble ;
et où au moins une partie de chacune desdites portions de serrage est déplaçable vers la partie intérieure du câble s'étendant à travers ladite ouverture en conséquence du serrage de la couche de blindage du câble entre l'insert et l'élément de serrage ;
**caractérisé en ce que** l'élément de serrage comprend au moins un renfoncement (52, 54) servant à recevoir au moins une partie d'au moins une dite deuxième surface de serrage et chacune desdites portions de serrage a des extrémités évasées radialement vers l'extérieur (26) respectives définissant lesdites deuxièmes surfaces de serrage respectives, où ladite deuxième surface de serrage est conçue pour devenir aplatie entre l'insert et la couche de blindage, pour une couche de blindage d'une première épaisseur, de sorte que la couche de blindage est serrée entre ladite première surface de serrage et l'élément de serrage et ladite deuxième surface de serrage est conçue pour se mettre en prise avec au moins un dit renfoncement, pour une couche de blindage d'une deuxième épaisseur, inférieure à ladite première épaisseur, de sorte que la couche de blindage est serrée entre ladite deuxième surface de serrage et ledit renfoncement pour augmenter l'effort requis pour tirer la couche de blindage hors du dispositif de serrage.

2. Un dispositif de serrage selon la revendication 1, où au moins une dite deuxième surface de serrage est conçue pour être comprimée lorsque la couche de blindage est serrée entre la portion de serrage correspondante et l'élément de serrage de sorte que la couche de blindage est serrée entre la première surface de serrage et l'élément de serrage et entre la deuxième surface de serrage et l'élément de serrage.

3. Un dispositif de serrage selon l'une quelconque des revendications précédentes, où au moins une partie des portions de serrage est déplaçable vers la partie intérieure du câble s'étendant à travers l'ouverture au moyen d'une déformation de ladite partie de la portion de serrage.

4. Un dispositif de serrage selon l'une quelconque des revendications précédentes, où lesdites premières surfaces de serrage sont définies par une pluralité de portions déplaçables vers l'intérieur séparées par des fentes (28).

5. Un dispositif de serrage selon la revendication 4, où les fentes se terminent à un emplacement espacé d'une extrémité (30) de l'insert dans une direction le long de l'axe longitudinal du câble.

6. Un dispositif de serrage selon l'une quelconque des revendications précédentes, où l'insert comprend un corps d'insert (17) et une partie de serrage (19) montée sur le corps d'insert, et où la partie de serrage définit au moins une dite portion de serrage et une portion d'extrémité (29) du corps d'insert est déformée radialement vers l'extérieur pour empêcher le retrait de la partie de serrage du corps d'insert.

7. Un dispositif de serrage selon l'une quelconque des revendications précédentes, où l'élément de serrage a un corps annulaire conçu pour entourer l'insert.

8. Un dispositif de serrage selon la revendication 7, où l'élément de serrage a un diamètre interne croissant dans une direction d'un axe longitudinal de l'élément de serrage depuis au moins un dit renfoncement jusqu'à au moins une extrémité axiale de l'élément de serrage, et facultativement où l'élément de serrage a un unique dit renfoncement situé substantiellement à égale distance par rapport auxdites extrémités axiales de l'élément de serrage, et un dit diamètre interne croissant respectif dans une direction depuis ledit renfoncement jusqu'à chaque dite extrémité axiale de l'élément de serrage.

9. Un dispositif de serrage selon l'une quelconque des revendications précédentes, incluant une ou plusieurs des caractéristiques suivantes :
(i) où l'élément de serrage est conçu pour s'étirer lorsqu'une couche de blindage du câble est serrée entre au moins une dite première surface de serrage et l'élément de serrage et/ou entre au moins une dite deuxième surface de serrage et au moins un dit renfoncement recevant au moins une partie de ladite au moins une dite deuxième surface de serrage ;
(ii) où une pluralité desdits renfoncements sont agencés à des distances axiales respectives substantiellement égales par rapport à chaque extrémité axiale de l'élément de serrage ; ou
(iii) où l'insert et l'élément de serrage sont conçus pour venir en butée l'un contre l'autre dans une direction axiale du câble lorsque ladite couche de blindage est serrée entre l'insert et l'élément de serrage lorsque l'insert et l'élément de serrage sont dans une position prédéterminée l'un relativement à l'autre.

10. Un procédé de formation d'un insert du dispositif de serrage selon la revendication 6, le procédé comprenant le montage de la partie de serrage sur le corps d'insert, et la déformation d'une portion d'extrémité du corps d'insert radialement vers l'extérieur pour empêcher le retrait de la partie de serrage du corps d'insert.

11. Un connecteur de câble (2) comprenant un dispositif de serrage selon l'une quelconque des revendications 1 à 9, une première partie de boîtier (34) conçue pour recevoir ledit insert, et une deuxième partie de boîtier (36) conçue pour se mettre en prise avec ladite première partie de boîtier pour maintenir ledit insert et ledit élément de serrage en position l'un relativement à l'autre afin de serrer une couche de blindage d'un câble entre ladite au moins une dite portion de serrage et ledit élément de serrage.

12. Un connecteur de câble selon la revendication 11, incluant une ou plusieurs des caractéristiques suivantes :
(i) où les première et deuxième parties de boîtier sont filetées de manière à coopérer de sorte que la mise en prise de la première partie de boîtier par la deuxième partie de boîtier amène une partie de boîtier à venir en butée contre l'insert et l'autre partie de boîtier à venir en butée contre l'élément de serrage afin de déplacer l'élément de serrage pour entourer l'insert et pour ainsi mettre en prise la couche de blindage entre l'élément de serrage et au moins une dite surface de serrage de l'insert ; ou
(ii) où une position de la première partie de boîtier relativement à la deuxième partie de boîtier est définie par une butée avec ledit insert et ledit élément de serrage dans une direction axiale du câble lorsque ladite couche de blindage est serrée entre l'insert et l'élément de serrage lorsque l'insert et l'élément de serrage sont dans une position prédéterminée l'un relativement à l'autre, et facultativement où la position de la première partie de boîtier relativement à la deuxième partie de boîtier est définie par une butée de la première partie de boîtier avec l'un dudit insert et dudit élément de serrage, et une butée de la deuxième partie de boîtier avec l'autre dudit insert et dudit élément de serrage.

13. Un connecteur de câble selon la revendication 11 ou la revendication 12, où le connecteur de câble est un presse-étoupe.
